# EUROPEAN PATENT SPECIFICATION

(11) **EP 1 704 740 B1**
(45) Date of publication and mention of the grant of the patent: **30.04.2008**
(21) Application number: 03785926.1
(22) Date of filing: 23.12.2003
(51) Int. Cl.: H04Q 7/38

(54) **METHOD AND COMPUTER PROGRAM PRODUCT FOR DETERMINING A TARGET BASE STATION FOR HAND-OFF OF A MOBILE STATION**
VERFAHREN UND COMPUTERPROGRAMMPRODUKT ZUM BESTIMMEN EINER ZIELBASISSTATION FÜR DEN HANDOVER EINER MOBILSTATION
PROCEDE ET PRODUIT PROGRAMME INFORMATIQUE POUR DETERMINER LA STATION DE BASE CIBLE POUR LE TRANSFERT D'UNE STATION MOBILE

(43) Date of publication of application: 27.09.2006
(73) Proprietor: TELEFONAKTIEBOLAGET LM ERICSSON (publ), 164 83 Stockholm (SE)
(72) Inventor: DE TORBAL, René, Fernand, Emile, NL-5644 GA EINDHOVEN (NL)
(74) Representative: Dohmen, Johannes Maria Gerardus
(86) International application number: PCT/EP2003/014807
(87) International publication number: WO 2005/064969

(56) References cited:
- WO-A-01/58182
- GB-A- 2 389 015
- US-A- 5 189 734
- US-A- 6 125 278

## Description

### Field of the Invention

The present invention relates to a method, in a mobile communication system, of determining a target base station for a hand-off of a mobile station that is served by a serving base station, wherein the method of determining the target base station is based on a current location of the mobile station, wherein the method of determining the target base station is further based on available route information of a user of said mobile station, said available route information being based on planned route information of said user.

The present invention further relates to a computer program product for use with a method as described above.

### Background of the Invention

A similar method is described in UK patent application nr. GB 2 389 015, related to position based capacity reservation for base stations.

Mobile communication systems conventionally consist of a plurality of radio base stations (hereinafter called Base Stations) arranged in a pattern so as to define a plurality of overlapping cells which provide radio communication support in a geographic area. A mobile station communicates with the Base Station of the corresponding cell in which the mobile station resides. This communication typically occurs through a channel assigned to the connection by the system. When the mobile station is moving, the mobile station may transition between adjacent cells due to the relative movement between the mobile station and the Base Station. This transitioning would eventually terminate the connection because the received signal strength associated with the signals would diminish to a level where either the Base Station or mobile station cannot adequately receive the other's transmissions to decode information associated therewith. Transitioning between cells can additionally cause a significant degradation in signal quality. Signal quality degradation and termination of communication due to inadequate signal strength represent aspects of the cell transition problem in mobile cellular communications.

A solution to these aspects of the cell transition problem is commonly called hand-off. This conventional technique hands-off an in-process communication with a mobile station from one Base Station in a first cell to another Base Station in another cell. This hand-off process maintains the continuity of the connection and prevents the termination of the call when the mobile station is moving from one cell to another. The hand-off process may be accomplished using a number of system dependent methods.

In existing analog systems, for example, a serving Base Station determines the need for a hand-off of a mobile station whose connection it is handling based on periodic measurements of the signal strength and/or signal quality of the uplink voice channel signals received from that mobile station. If the measured signal strength and/or signal quality is below a predetermined level, the serving Base Station sends a hand-off request to the mobile switching center. The mobile switching center (MSC) queries adjacent Base Stations for reports of the previously measured signal strength of signals on the voice channel currently being used by the mobile station. The MSC selects the target candidate cell associated with the adjacent Base Station reporting the strongest signal, provided that the reported signal strength is above a threshold, and transmits appropriate commands to that adjacent Base Station and to the mobile station via the serving Base Station to implement the hand-off on the same or a different traffic channel.

In digital or dual-mode systems, as specified for example in the EIA/TIA IS-136 standard, hand-off from a digital traffic channel may also be implemented using a Mobile-Assisted Hand-off (MAHO) procedure. Using this procedure, a mobile station may be ordered by the network to measure and report signal strength and/or other parameters of digital radio channels emitted by the serving Base Station, as well as those emitted by adjacent Base Stations. This enables hand-off decisions made by the network to be based not only on the measured signal strength and other parameters of the uplink signal received from the mobile station, but also on the downlink signal parameters detected by the mobile station on channels associated with the serving and adjacent Base Stations.

The conventional techniques for target cell selection discussed above, where either uplink or downlink signal quality measurements are performed, suffer from a number of deficiencies when used in a hand-off process. In these conventional target cell selection techniques a signal quality decrease is necessary to trigger hand-off.

Therefore, due to this signal quality decrease, call quality can be negatively affected or the mobile station can even lose contact before hand-off is executed. Further, the time required to execute hand-off is increased because of the necessity of locating and verifying signal quality measurements for several adjacent cells before a target cell can be determined.

An additional problem with these conventional techniques is that target cell selection based solely on signal quality measurements can result in the selection of a target cell that is not necessarily the best candidate among the adjacent cells.

A common technique for minimizing hand-off disruption includes reservation-based systems. In reservation based systems, a number of free channels are reserved in each cell for hand-off requests. The number of reserved channels typically is fixed or dynamically adjustable.

In broadband wireless cellular mobile systems, such as Wideband Code Division Multiple Access systems (WCDMA) the need for reservation of a channel to enable hand-offs is even more urgent for additional reasons. These known systems depend largely on providing a certain level of network performance, also known as Quality of Service (QoS) to a user of a mobile station. In case of a moving mobile station from a first Base Station to a target Base Station, a telecommunication provider needs to reserve network resources, in order to guarantee a level of QoS. One way to offer a certain level of QoS is to reserve in the target Base Station a communication channel, which provides:
- a minimum bandwidth for downloading of e.g. video streaming;
- a maximum level of delay of receiving e.g. live streaming;
- an acceptable level of distortion (due to jitter and loss);
- reliability (e.g. certain percentage of the time that aforementioned aspects are below a certain value).

Because Base Stations in broadband systems also have limited capacity, providing a level of QoS, means that the telecommunication provider has to use scarce network resources in an efficient manner. The total amount of bandwidth capacity of a Base Station, for example, has to be shared among the users of the base station in an efficient way. In order to use the network resources as efficiently as possible it is required to anticipate that a user is moving from a first Base Station to a target Base Station.

One solution that aims at a more efficient use of network resources, is described in WO 00/28768 (Telefonaktiebolaget LM Ericsson). WO 00/28768 exemplifies a method for selecting a target cell for hand-off in a radio communication system, which uses mobile station location, direction, and speed information to determine the likelihood of the mobile station arriving at a border of the target cell. The system reserves a channel in the target cell for hand-off when the likelihood of the mobile station arriving at the target cell reaches some predetermined value. In this way the number of possible target Base Stations and therefore the reservation of network resources, such as communication channels, is limited.

In the solution as described in WO 00/2876, however, the determination of a target cell for hand-off depends on a calculated likelihood of the mobile station arriving at the target cell. This calculated likelihood will, by definition, have an error margin incorporated therein and therefore the above-described solution does not provide the most efficient use of network resources.

### Summary of the Invention

It is an object of the invention to provide a more efficient use of network resources. Further advantages are obtained by the embodiments of the invention.

In a first aspect of the invention this object is achieved with a method, according to claim 1. Further embodiments are provided by the dependent claims 2-13.

Based on available route information the target base station will easily be established. As the mobile communication system has commonly already available the geographical locations of each Base Station and the cell that is served by that Base Station, the available route information may be mapped on the location of the cells, in other words the cells that the mobile station is about to travel through are known. Therefore, if the current location of the mobile station is also known, the target Base Station may be deducted from the route that the mobile station is taking.

In an embodiment in accordance with the invention, the available route information is based on a planned route information of the user of said mobile station.
Although available route information according to the invention may be based on historical route information, for example because the route or part of a route which the mobile station is taking is (part of) a regular route, which the mobile station takes every work day, the available route information may also be based on a planned route which is to be taken in the (near) future, which planned route is available for the mobile system to base the determination of a target Base Station on.

In another embodiment, the available route information is provided by the user of the mobile station (hereinafter called "Mobile User").

As a Mobile User knows best which route he is taking and where he is going, this provides first hand information for the mobile system to base the determination of the target Base Station on. A Mobile User may provide the route information by transmitting a code which may be readable from a train- or toll road ticket. A Mobile User may provide the route information previous to, or during the travelling along the route. In the latter case a navigation system in the car of a Mobile User or connected to the Mobile Station is especially helpful to provide route information. A Mobile User may receive a discount on services provided by the Mobile System to stimulate the providing of the route information. On the other hand a Moble User wishing to have a level of QoS along a certain route may easier be willing to provide the route information.

In a further embodiment, the available route information is provided by a route operator, operating at least part of the planned route, using information of a ticket or subscription, said ticket or subscription being provided by the route operator to a Mobile User of the mobile station.

This has the advantage that a Mobile User does not have to worry about hand-offs in the mobile system, therefore this provides for a Mobile User a transparent solution.

In a further embodiment, the route operator is a train operator or a toll road operator.

The invention is especially useful for Mobile Users travelling by train or on by car on a toll road. The railway infrastructure has the advantage that there are no sideways for an individual Mobile User to leave the road. Toll roads are closed roads, which a Mobile User may usually not enter or leave without being detected.

In a further embodiment, the current location is provided by the user of the mobile station.

Again this has the advantage that it provides first hand information from a Mobile User on the current location. Also in this case a navigation system in the car of a Mobile User or connected to the Mobile Station is especially helpful to provide route information. The Mobile Station may also use the navigational 1 data of the navigation system to provide current route information directly to an entity in order for the mobile communication system to determine the current position of the Mobile Station.

In a further embodiment, the current location is provided by a route operator.

Again this has the advantage that for a Mobile User this is a transparent solution. The current location may be provided by a toll road operator by detecting the location of the Mobile Station using buoys or other positioning systems known of the current state of the art. A train operator may determine a position of the Mobile Station based on the location of the train, which train location may be established with positioning systems known of the current state of the art.

In a further embodiment, the current location is provided by the mobile communication system, using a positioning system such as a global positioning system or a mobile positioning system.

This has the advantage that the current position is detected independently by the mobile communication system itself. The mobile communication system may by triangulation using the known positions of the base stations, determine the current position of a Mobile User usually within the range of 50 to 100 Meters. Another way of determining the current position of the Mobile Station is by identifying the Cell ID of the Base Station to which the Mobile Station is connected through an air-interface.

In a further embodiment, the available route information or the current location is provided by a file transfer or by sending of a multimedia message such as a voice message, a short message or an e-mail message.

The train or toll road operator or a Mobile User may inform any entity which provides the available route information for the Mobile System to base the determining of the target Base Station on.

In a further embodiment the method further comprises a step of reserving network resources in the target base station.

This has the advantage that a QoS level for a Mobile User may be provided along he whole route according to the available route information.

In a further embodiment the reservation of network resources comprises reservation of a communication channel, a level of bandwidth of the communication channel, a level of delay in transmission of data through the communication channel, a level of distortion in transmission of data through the communication channel, or a level of reliability of the communication channel.

In a further embodiment the target base station is additionally determined by the availability of network resources in one or more base stations, adjacent to the serving base station.

This has the advantage that not only the geographical location of the Base Stations are taken into account in determining the target Base Station, but also the possibility that the target Base Station will actually be able to take over the connection from the current Base Station. It could well be, as may be the case in a GSM system, that the initial target Base station has already the maximum number of simultaneous connections, or as may be the case in a WCDMA system, that the initial target Base Station does not have enough free bandwidth available. In these cases an alternative target Base Station having sufficient network resources, has to be determined.

In a second aspect of the invention a computer program product according to claim 14 is provided.

Although a number of embodiments are described herein for purposes of illustration, these embodiments are not meant to be limiting. Those skilled in the art will recognize modifications that can be made in the illustrated embodiments. Such modifications are meant to be covered by the scope of the appended claims.

### Brief Description of the Drawings

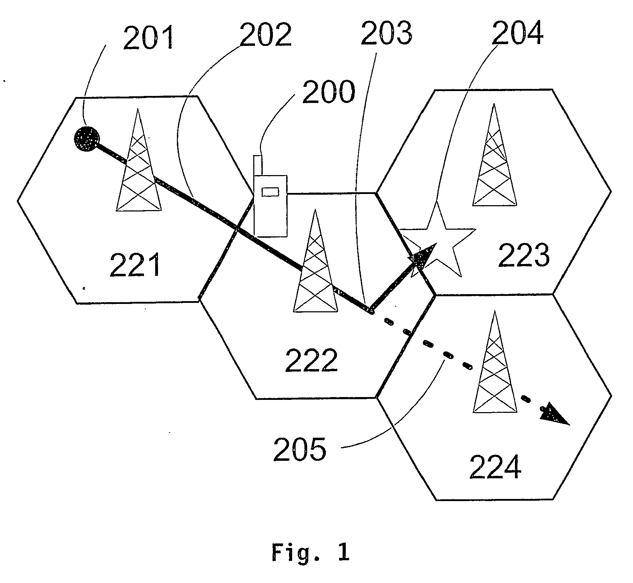

FIG. 1 is a diagram of a mobile station traversing three adjacent cells.

### Detailed Description of the Drawings

According to Fig. 1, a mobile station 200 is traversing three adjacent cells 221, 222 and 223 using route 202, starting from starting point 201 and ending at finishing point 204. Assuming that mobile station 200 successfully was handed-off from the bases station of cell 221 to the base station of cell 222, the current situation would be that base station of cell 222 is the serving base station. It may be easily understood that next problem occurs when mobile station 200 traverses to cell 223. This diagram shows that, according to prior art solutions, which are based on predictive behaviour, based on historic movement data of mobile station 200, would determine cell 224 as target cell based on the fact that up to point 203, the mobile station is traversing in the direction 205 of cell 224, and therefore network resources would be reserved for the base station of cell 224 accordingly. In the prior art solutions cell 223 could be determined additionally as a candidate for a target cell. In this case for this cell also network resources would be reserved. Neither of both options according to the prior art is favourable. In the case that only cell 224 is determined as target cell, the method misses its mark. On the other hand when both cell 223 and 224 are determined for reserving network resources, reservation of resources for cell 224, will turn out to be redundant. Therefore both prior art methods would be inefficient.

The invention provides for an accurate determination of the target cell. Because the planned route of mobile station 200 is known to the mobile communication system, the most suitable target cell in the given example will be cell 223. The method provides for reservation of network resources for cell 223 and therefore secures a smooth hand-off of the mobile station from the serving base station of cell 222 to the target base station of cell 223 and prevent the unnecessary reservation of network resources in other adjacent base stations.

## Claims

1. A method, in a mobile communication system, of determining a target base station (224) for a hand-off of a mobile station (200) that is served by a serving base station (221), wherein the method of determining the targets base station (224) is based on a current location of the mobile station (200), wherein the method of determining the target base station (224) is further based on available route information of a user of said mobile station (200), said available route information being based on planned route information of said user, **characterised in that**, said planned route information is provided by a route operator operating at least a part of said planned route.

2. A method according to claim 1, wherein said planned route information is provided by said route operator to an entity of said mobile communications system.

3. A method according to any of the previous claims, wherein the available route information is further based on a historic route information of a previously used route of a user of said mobile station (200).

4. A method according to any of the previous claims, wherein the available route information is provided by a user of the mobile station (200).

5. A method according to any of the previous claims, wherein for providing said planned route information, said route operator uses information of a ticket or subscription, said ticket or subscription being provided by the route operator to a user of the mobile station (200).

6. A method according to claim 5, wherein the route operator is a train operator or a toll road operator.

7. A method according to any of the previous claims, wherein the current location is provided by a user of the mobile station (200).

8. A method according to any of the previous claims, wherein the current location is provided by a route operator.

9. A method according to any of the previous claims, wherein the current location is provided by the mobile communication system, using a positioning system such as a global positioning system or a mobile positioning system.

10. A method according to any of the previous claims, wherein the planned route information or the current location is provided by a file transfer or by sending of a multimedia message such as a voice message, a short message or an e-mail message.

11. A method according to any of the previous claims, further comprising a step of reserving network resources in said target base station.

12. A method as claimed in claim 11, wherein said reservation of network resources comprises reservation of a communication channel, a level of bandwidth of the communication channel, a level of delay in transmission of data through the communication channel, a level of distortion in transmission of data through the communication channel, or a level of reliability of the communication channel.

13. A method according to any of the previous claims, wherein the method of determining the target base station (224) is additionally determined by the availability of network resources in one or more base stations, adjacent to the serving base station.

14. A computer program product for use in a mobile communication system, comprising code means arranged for performing the steps of the method according to any of the claims 1-13, for determining a target base station (224) for a hand-off of a mobile station (200) that is served by a serving base station (221), wherein said computer program product is arranged for determining the target base station (224) based on a current location of the mobile station (200), wherein said computer program product is further arranged for determining a target base station (224) based on available route information of a user of said mobile station (200), said available route information being based on planned route information of said user, **characterised in that**, said planned route information is provided by a route operator operating at least a part of said planned route.

## Patentansprüche

1. Ein Verfahren in einem Mobilkommunikationssystem des Bestimmens einer Zielbasisstation (224) für eine Übergabe eines Mobilfunkendgeräts (200), das von einer dienenden Basisstation (221) bedient wird, wobei das Verfahren des Bestimmens der Zielbasisstation (224) auf einer derzeitigen Position des Mobilfunkendgeräts (200) basiert, wobei das Verfahren des Bestimmens der Zielbasisstation (224) ferner auf verfügbarer Routeninformation eines Benutzers der Mobilfunkstation (200) basiert, wobei die verfügbare Routeninformation auf geplanter Routeninformation des Benutzers basiert, **dadurch gekennzeichnet, dass** die geplante Routeninformation von einem Routenbetreiber, der mindestens einen Teil der geplanten Route betreibt, bereitgestellt wird.

2. Ein Verfahren nach Anspruch 1, wobei die geplante Routeninformation von dem Routenbetreiber an eine Einheit des Mobilkommunikationssystems bereitgestellt wird.

3. Ein Verfahren nach einem der vorhergehenden Ansprüche, wobei die verfügbare Routeninformation ferner auf einer historischen Routeninformation einer früher benutzten Route eines Benutzers des Mobilfunkendgeräts (200) basiert.

4. Ein Verfahren nach einem der vorhergehenden Ansprüche, wobei die verfügbare Routeninformation von einem Benutzer des Mobilfunkendgeräts (200) bereitgestellt wird.

5. Ein Verfahren nach einem der vorhergehenden Ansprüche, wobei der Routenbetreiber zum Bereitstellen der geplanten Routeninformation die Information eines Fahrscheines oder einer Subskription benutzt, wobei der Fahrschein oder die Subskription von dem Routenbetreiber an einen Benutzer des Mobilfunkendgeräts (200) bereitgestellt wird.

6. Ein Verfahren nach Anspruch 5, wobei der Routenbetreiber ein Zugbetreiber oder ein Betreiber einer gebührenpflichtigen Straße ist.

7. Ein Verfahren nach einem der vorhergehenden Ansprüche, wobei die derzeitige Position von einem Benutzer des Mobilfunkendgeräts (200) bereitgestellt wird.

8. Ein Verfahren nach einem der vorhergehenden Ansprüche, wobei die derzeitige Position von einem Routenbetreiber bereitgestellt wird.

9. Ein Verfahren nach einem der vorhergehenden Ansprüche, wobei die derzeitige Position von dem Mobilkommunikationssystem unter Benutzung eines Ortungssystems, wie etwa eines globalen Ortungssystems oder eines mobilen Ortungssystems, bereitgestellt wird.

10. Ein Verfahren nach einem der vorhergehenden Ansprüche, wobei die geplante Routeninformation oder die derzeitige Position durch eine Dateiübertragung oder durch Senden einer Multimedia-Nachricht, wie etwa einer Sprachnachricht, einer Kurznachricht oder einer E-Mail-Nachricht, bereitgestellt wird.

11. Ein Verfahren nach einem der vorhergehenden Ansprüche, ferner umfassend einen Schritt des Reservierens von Netzwerkressourcen in der Zielbasisstation.

12. Ein Verfahren nach Anspruch 11, wobei die Reservierung von Netzwerkressourcen folgendes umfasst: die Reservierung eines Kommunikationskanals, eines Grades von Bandbreite des Kommunikationskanals, einen Grad der Verzögerung bei der Übertragung von Daten über den Kommunikationskanal, einen Grad von Störung bei der Übertragung von Daten über den Kommunikationskanal oder einen Grad der Zuverlässigkeit des Kommunikationskanals.

13. Ein Verfahren nach einem der vorhergehenden Ansprüche, wobei das Verfahren des Bestimmens der Zielbasisstation (224) zusätzlich durch die Verfügbarkeit von Netzwerkressourcen in einer oder mehreren, zu der dienenden Basisstation benachbarten Basisstationen bestimmt wird.

14. Ein Computerprogrammprodukt zur Benutzung in einem Mobilkommunikationssystem, umfassend Codemittel ausgebildet zum Ausführen der Schritte des Verfahrens nach einem der Ansprüche 1-13, zum Bestimmen einer Zielbasisstation (224) für eine Übergabe eines Mobilfunkendgeräts (200), das von einer dienenden Basisstation (221) bedient wird, wobei das Computerprogrammprodukt ausgebildet ist zum Bestimmen der Zielbasisstation (224) basiert auf einer derzeitigen Position des Mobilfunkendgeräts (200), wobei das Computerprogrammprodukt ferner ausgebildet ist zum Bestimmen einer Zielbasisstation (224) basiert auf verfügbarer Routeninformation eines Benutzers des Mobilfunkendgeräts (200), wobei die verfügbare Routeninformation auf geplanter Routeninformation des Benutzers basiert, **dadurch gekennzeichnet, dass** die geplante Routeninformation durch einen Routenbetreiber, der zumindest einen Teil der geplanten Route betreibt, bereitgestellt wird.

## Revendications

1. Procédé, dans un système de communication mobile, de détermination d'une station de base de destination (224) pour un transfert d'une station mobile (200) qui est desservie par une station de base de desserte (221), dans lequel le procédé de détermination de la station de base de destination (224) est fondé sur une position courante de la station mobile (200), dans lequel le procédé de détermination de la station de base de destination (224) est en outre fondé sur des informations disponibles sur l'itinéraire d'un utilisateur de ladite station mobile (200), lesdites informations disponibles sur l'itinéraire étant fondées sur des informations sur un itinéraire planifié par l'utilisateur, **caractérisé en ce que** lesdites informations sur un itinéraire planifié sont fournies par un opérateur d'itinéraire qui exploite au moins une partie dudit itinéraire planifié.

2. Procédé selon la revendication 1, dans lequel lesdites informations sur l'itinéraire planifié sont foumies par ledit opérateur d'itinéraire à une entité dudit système de communication mobile.

3. Procédé selon l'une quelconque des revendications précédentes, dans lequel les informations disponibles sur l'itinéraire sont en outre fondées sur des informations historiques sur un itinéraire parcouru antérieurement par un utilisateur de ladite station mobile (200).

4. Procédé selon l'une quelconque des revendications précédentes, dans lequel les informations disponibles sur l'itinéraire sont foumies par un utilisateur de la station mobile (200).

5. Procédé selon l'une quelconque des revendications précédentes, dans lequel, pour founir lesdites informations sur l'itinéraire planifié, ledit opérateur d'itinéraire utilise des informations provenant d'un ticket ou d'un abonnement, ledit ticket ou abonnement étant fourni par l'opérateur d'itinéraire à un utilisateur de la station mobile (200).

6. Procédé selon la revendication 5, dans lequel l'opérateur d'itinéraire est un opérateur ferroviaire ou un opérateur d'une route à péage.

7. Procédé selon l'une quelconque des revendications précédentes, dans lequel la position courante est fournie par un utilisateur de la station mobile (200).

8. Procédé selon l'une quelconque des revendications précédentes, dans lequel la position courante est fournie par un opérateur d'itinéraire.

9. Procédé selon l'une quelconque des revendications précédentes, dans lequel la position courante est fournie par le système de communication mobile à l'aide d'un système de localisation tel qu'un système mondial de localisation ou un système de localisation de mobiles.

10. Procédé selon l'une quelconque des revendications précédentes, dans lequel les informations sur l'itinéraire planifié ou la position courante sont foumies par un transfert de fichier ou bien en envoyant un message multimédia tel qu'un message vocal, un message court ou un message électronique.

11. Procédé selon l'une quelconque des revendications précédentes, comprenant en outre une étape consistant à réserver des ressources de réseau sur ladite station de base de destination.

12. Procédé selon la revendication 11, dans lequel ladite réservation de ressources de réseau comprend la réservation d'un canal de communication, d'un niveau de bande passante sur le canal de communication, d'un niveau de retard dans la transmission des données sur le canal de communication, d'un niveau de distorsion dans la transmission des données sur le canal de communication ou d'un niveau de fiabilité du canal de communication.

13. Procédé selon l'une quelconque des revendications précédentes, dans lequel le procédé de détermination de la station de base de destination (224) est en outre déterminé par la disponibilité de ressources de réseau sur une ou plusieurs stations de base adjacentes à la station de base de desserte.

14. Progiciel d'ordinateur destiné à être utilisé dans un système de communication mobile, comprenant des moyens de code conçus pour exécuter les étapes du procédé selon l'une quelconque des revendications 1 à 13, afin de déterminer une station de base de destination (224) pour un transfert d'une station mobile (200) qui est desservie par une station de base de desserte (221), dans lequel ledit progiciel d'ordinateur est conçu pour déterminer la station de base de destination (224) sur la base d'une position courante de la station mobile (200), dans lequel ledit progiciel d'ordinateur est en outre conçu pour déterminer une station de base de destination (224) sur la base d'informations disponibles sur l'itinéraire d'un utilisateur de ladite station mobile (200), lesdites informations disponibles sur l'itinéraire étant fondées sur des informations sur un itinéraire planifié par l'utilisateur, **caractérisé en ce que** lesdites informations sur un itinéraire planifié sont fournies par un opérateur d'itinéraire qui exploite au moins une partie dudit itinéraire planifié.
